# EUROPEAN PATENT SPECIFICATION

(11) **EP 2 610 113 B1**
(45) Date of publication and mention of the grant of the patent: **05.08.2015**
(21) Application number: 12188334.2
(22) Date of filing: 12.10.2012
(51) Int. Cl.: B60R 16/027, B62J 6/18, B62J 15/00

(54) **Saddle-ride type vehicle**
Sattelfahrzeug
Véhicule à monture de selle

(30) Priority: 28.12.2011 JP 2011288301
(43) Date of publication of application: 03.07.2013
(73) Proprietor: Yamaha Hatsudoki Kabushiki Kaisha, Iwata-shi, Shizuoka 438-8501 (JP)
(72) Inventor: Pantaeng, Chatwit, 10540 Samutprakarn (TH)
(74) Representative: Grünecker Patent- und Rechtsanwälte PartG mbB

(56) References cited:
- EP-A1- 1 657 150
- JP-A- 5 254 469
- JP-A- 2000 344 170
- JP-A- 2002 187 588
- JP-A- 2010 070 111
- US-A1- 2010 001 551

## Description

The present invention relates to a saddle-ride type vehicle. A saddle-ride type vehicle according to the preamble of claim 1 is known from US 2010/001551.

A saddle-ride type vehicle is provided with a retaining member for retaining a cable. The retaining member retains a cable member disposed on a side of a front fender. In the saddle-ride type vehicle disclosed in Japanese Laid-open Patent Application JP-A-09-315361, for example, a retaining member is attached to a side surface of a front fender so as to project to the side.

However, a structure in which a retaining member projects to the side surface from a side of a front fender, as in the case of the saddle-ride type vehicle disclosed in Japanese Laid-open Patent Application JP-A-09-315361, increases the air resistance to which the retaining member is subjected when the vehicle is driving. For this reason, it is necessary to ensure that the retaining member is strongly attached to the front fender.

An object of the present invention is to provide a saddle-ride type vehicle capable of reducing the air resistance to which the retaining member is subjected during driving.

Such an object is achieved by a saddle-ride type vehicle according to claim 1.

A saddle-ride type vehicle according to the present invention is provided with a front wheel, a fender, a retaining member, and a cable member. The fender is disposed above the front wheel. The retaining member is attached to the fender, and disposed so as to project rearward from the fender. The cable member is retained by the retaining member.

A saddle-ride type vehicle according to a second aspect of the present invention is the saddle-ride type vehicle according to claim 1, wherein the retaining member is disposed to a side away from the centerline of the vehicle in the vehicle width direction.

A saddle-ride type vehicle according to a third aspect of the present invention is the saddle-ride type vehicle according to either claim 1 or the second aspect, wherein the fender includes an inset portion depressed inward in the vehicle width direction. The retaining member is attached to the inset portion.

A saddle-ride type vehicle according to a fourth aspect of the present invention is the saddle-ride type vehicle according to the third aspect, wherein the inset portion covers the first support member from in front.

The saddle-ride type vehicle according to the present invention is provided with a first support member, a second support member, and a bracket. The first support member and the second support member are aligned in the vehicle width direction, and rotatably support the front wheel. The bracket supports the first support member and the second support member. The fender is secured to the bracket.

In the saddle-ride type vehicle according to the present invention the fender includes a first side surface that is one of the left or right surfaces, and a second side surface that is the other left or right surface. The retaining member projects rearward from the first side surface, and is disposed so as to cover the first support member from the side. The second side surface is disposed so as to cover the second support member from the side.

In a saddle-ride type vehicle according to a preferable aspect of the present invention, the retaining member includes a securing portion positioned rearward of the cable member, and is secured to the fender at the securing portion.

A saddle-ride type vehicle according to a further preferable aspect of the present invention is provided with a vehicle body cover. The vehicle body cover preferably covers at least a portion of the retaining member from the side.

In a saddle-ride type vehicle according to another preferable aspect of the present invention , the retaining member and fender are made of resin.

In a saddle-ride type vehicle according to a further preferable aspect of the present invention, the retaining member is made of a material having greater wear resistance than the fender.

In a saddle-ride type vehicle according to another preferable aspect of the present invention, the cable member includes a wire for transmitting the rotation of the front wheel.

In a saddle-ride type vehicle according to a further preferable aspect of the present invention, an upper edge of the retaining member includes a shape inclining rearwards and downwards.

In a saddle-ride type vehicle according to another preferable aspect of the present invention, the retaining member is a separate member from the fender.

In the saddle-ride type vehicle according to the present invention, the retaining member is disposed so as to project rearward from the fender. For this reason, the length to which the retaining member projects sideways from the fender is kept down. It is thereby possible to reduce the amount of air resistance to which the retaining member is subjected during driving compared to when the retaining member is disposed so as to project sideways from the fender.

In the saddle-ride type vehicle according to the second aspect of the present invention, the retaining member is disposed to a side away from the centerline of the vehicle in the vehicle width direction. Thus, the retaining member does not have a portion passing through the centerline of the vehicle in the vehicle width direction. It is thus possible to reduce narrowing of the interval between the member facing the fender and the fender by the retaining member.

In the saddle-ride type vehicle according to the third aspect of the present invention, the retaining member is attached to the inset portion. It is thus possible to further reduce the air resistance to which the retaining member is subjected during driving.

In the saddle-ride type vehicle according to the fourth aspect of the present invention, the inset portion covers the first support member from the front. The support member is thus protected by the inset portion. It is thereby possible to reduce damage to the support member.

In the saddle-ride type vehicle according to the present invention, the fender is secured to the bracket. It is thus possible to easily ensure that the retaining member is firmly installed.

In the saddle-ride type vehicle according to the present invention, the second side surface is disposed so as to cover the second support member from the side. Thus, the second support member is protected by the second side surface. In addition, the retaining member is disposed so as to cover the first support member from the side. The first support member is thus protected by the retaining member. Moreover, because the retaining member projects rearward from the first side surface, the length to which the fender projects to the side can be reduced. It is thereby possible to reduce the amount of air resistance to which the retaining member is subjected during driving.

In the saddle-ride type vehicle according to a preferable aspect of the present invention, the retaining member is secured to the fender at the securing portion positioned rearward of the cable member. It is thereby possible to firmly attach the retaining member to the fender.

In the saddle-ride type vehicle according to a further preferable aspect of the present invention, the vehicle body cover covers at least a portion of the retaining member from the side. Thus, at least a portion of the retaining member is protected by the vehicle body cover.

In the saddle-ride type vehicle according to another preferable aspect of the present invention, the retaining member and fender are made of resin, thereby facilitating manufacture and allowing manufacturing costs to be reduced compared to if the retaining member and fender were made of metal. However, if the retaining member and fender are made of resin, the retaining member is more easily affected by air resistance when the vehicle is being driven. For example, the retaining member is liable to deform due to air resistance when the vehicle is being driven. However, in the saddle-ride type vehicle according to the present aspect, the air resistance to which the retaining member is subjected during driving can be reduced, allowing the effects of air resistance to be alleviated.

In the saddle-ride type vehicle according to a further preferable aspect of the present invention, the retaining member is made of a material having greater wear resistance than the fender. Wearing of the fender by the cable member is thus reduced. In addition, if portion of the fender is used as a retainer for the cable member, the entire fender must be formed from a material having high wear resistance. The present embodiment allows for manufacturing costs to be reduced compared to such cases.

In the saddle-ride type vehicle according to another preferable aspect of the present invention, the cable member includes a wire for transmitting the rotation of the front wheel. The wire for conveying the rotation of the front wheel is thicker than an electrical wire for transmitting electrical signals, and thus cannot easily be flexibly formed. It is also difficult to impart the wire with a small bend in order to more accurately transmit rotation while also avoiding interference with the protective member covering the wire. Thus, the cable member is preferably retained so as to be movable within a predetermined range, rather than immovably secured. A larger retaining member compared to when only an electrical wire is retained is therefore necessary. In such cases, the air resistance to which the retaining member is subjected while driving increases. However, in the saddle-ride type vehicle according to the aspect, the air resistance to which the retaining member is subjected during driving can be reduced, allowing the effects of air resistance to be alleviated.

In the saddle-ride type vehicle according to a further preferable aspect of the present invention, an upper edge of the retaining member includes a shape inclining rearwards and downwards. It is thus possible to reduce interference of the retaining member with other members.

In the saddle-ride type vehicle according to another preferable aspect of the present invention, the retaining member is a separate member from the fender. This facilitates forming the retaining member.
FIG. 1 is a left side view of a saddle-ride type vehicle according to an embodiment of the present invention;
FIG. 2 is a front view of the saddle-ride type vehicle;
FIG. 3 is a left side view of the structure of a front fender and the vicinity thereof;
FIG. 4 is an illustration of the structure of the front fender and the vicinity thereof as viewed along a central axis of a support member;
FIG. 5 is a perspective view of the structure of the front fender and the vicinity thereof;
FIG. 6 is a right side view of the front portion of the saddle-ride type vehicle;
FIG. 7 is a left side view of the front portion of the saddle-ride type vehicle;
FIG. 8 is a schematic view of the disposition of a retaining member according to the present embodiment and the disposition of a retaining member according to a comparative example; and
FIG. 9 is a schematic view of the disposition of a retaining member according to another embodiment.

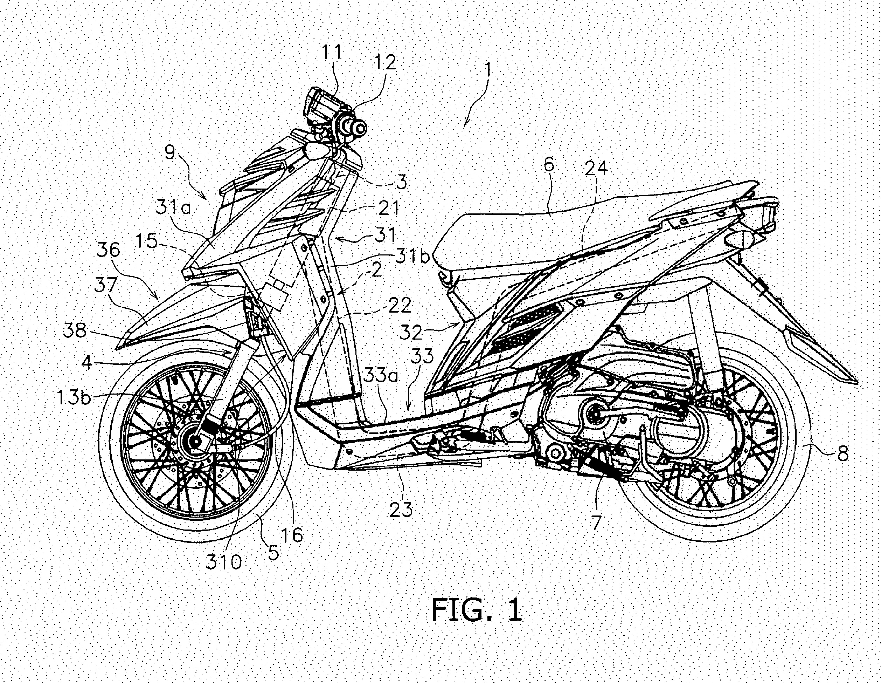

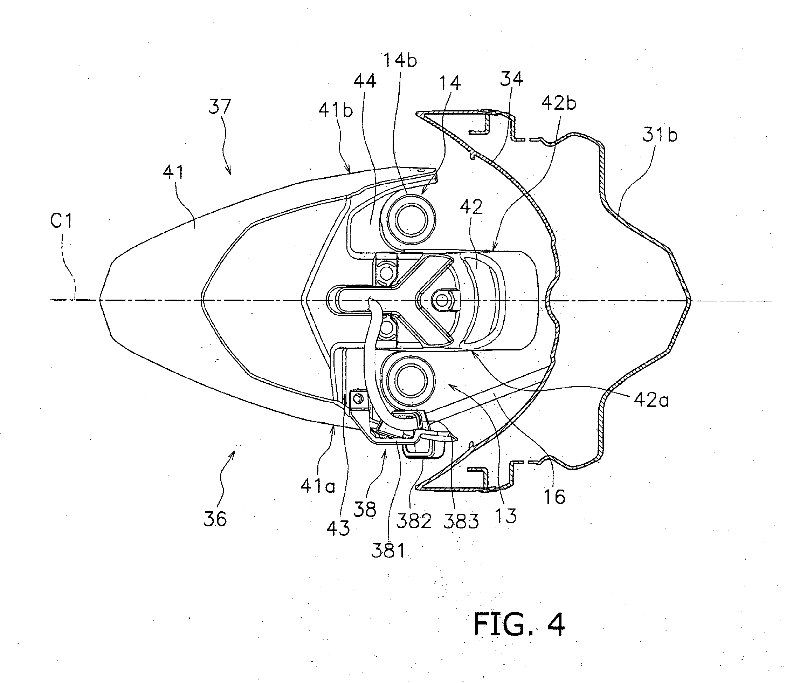

There follows a description of a saddle-ride type vehicle according to an embodiment of the present invention with reference to the drawings. FIG. 1 is a left side view of a saddle-ride type vehicle 1 according to an embodiment of the present embodiment. A saddle-ride type vehicle 1 is a scooter-type two-wheeled vehicle. The saddle-ride type vehicle 1 includes a vehicle body frame 2, a steering shaft 3, a front fork 4, a front wheel 5, a seat 6, an engine unit 7, a rear wheel 8, and a vehicle body cover 9. In the following description, "front-back direction" refers to the front-back direction of the vehicle from the perspective of a rider seated on the seat 6. "Left-right direction" refers to the left-right direction of the vehicle body from the perspective of a rider seated on the seat 6. In the present embodiment, "outward with respect to the vehicle width direction" means in a direction receding from a vehicle centerline (cf. FIG. 4, C1) extending in the front-back direction through the center of the vehicle width direction. "Inward with respect to the vehicle width direction" means in a direction approaching a vehicle centerline extending in the front-back direction through the center of the vehicle width direction.

The vehicle body frame 2 is, for example, formed from iron pipes. The vehicle body frame 2 is provided with a head pipe 21, a down frame 22, an underframe 23, and a rear frame 24. The vehicle body frame 2 may be formed as a single piece by bending, or constituted by a plurality of parts joined into a whole via welding or the like. The head pipe 21 is positioned in the center of the vehicle with respect to the vehicle width direction. The steering shaft 3 is rotatably inserted into the head pipe 21. A handlebar 12 is coupled to an upper portion of the steering shaft 3. A speedometer unit 11 for displaying vehicle speed is attached to the handlebar 12. The front fork 4 is coupled to a lower portion of the steering shaft 3.

The down frame 22 is connected to the head pipe 21. The down frame 22 extends downward from the head pipe 21. The underframe 23 is connected to a lower end of the down frame 22. The underframe 23 extends rearward from the down frame 22. The rear frame 24 is connected to a rear end of the underframe 23. The rear frame 24 extends rearward and upward from a rear end of the underframe 23. The seat 6 is disposed above the rear frame 24. The seat 6 is disposed rearward of the head pipe 21. The seat 6 is supported by the vehicle body frame 2. Specifically, the seat 6 is attached to the rear frame 24.

The engine unit 7 is pivotably attached to the vehicle body frame 2 by a bracket not shown in the drawings. The engine unit 7 includes an output shaft not shown in the drawings. The output shaft rotatably supports the rear wheel 8.

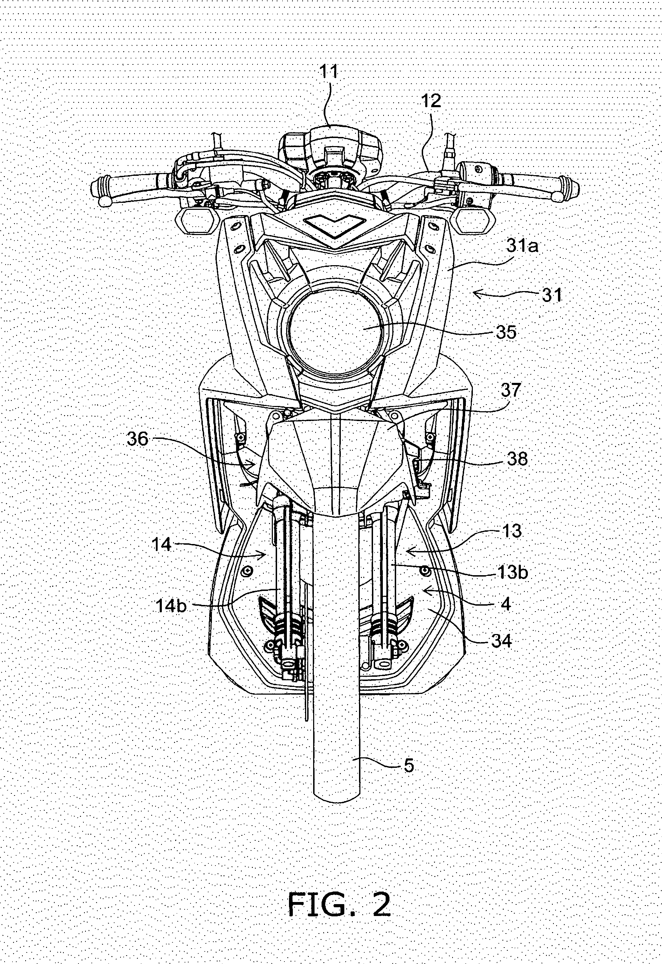

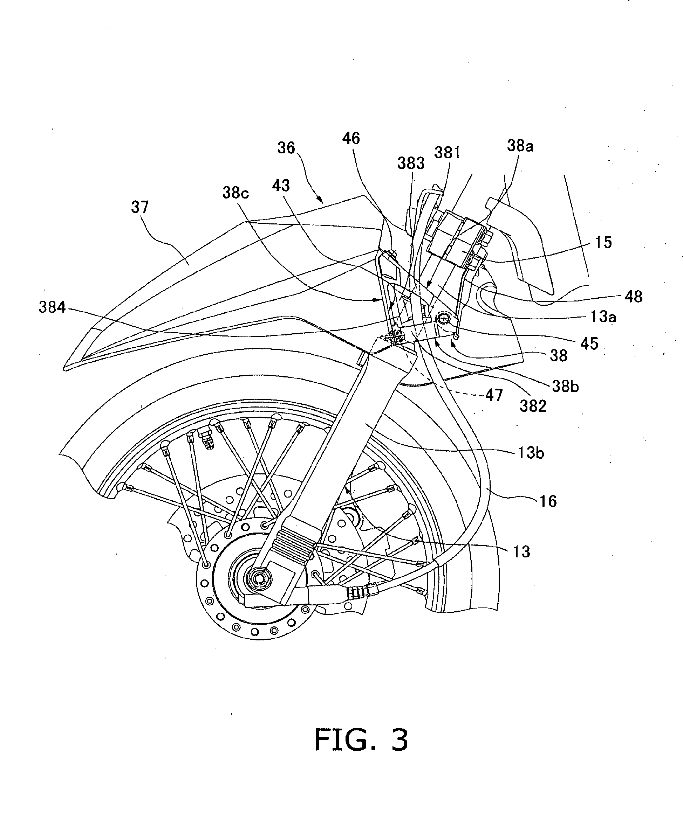

The front fork 4 rotatably supports the front wheel 5. The front fork 4 is an example of the support member of the present invention. FIG. 2 is a front view of the saddle-ride type vehicle 1. As shown in FIG. 2, the front fork 4 includes a first support member 13, a second support member 14, and a bracket 15 (cf. FIG. 1). The first support member 13 and the second support member 14 are aligned in the vehicle width direction. FIG. 3 is a left side view of the structure of a front fender 37 described hereafter and the vicinity thereof. As shown in FIG. 3, the first support member 13 includes a suspension mechanism. Specifically, the first support member 13 includes an inner tube 13a and an outer tube 13b, and absorbs shocks by extending and retracting. The second support member 14 shown in FIG. 2 also includes a structure similar to that of the first support member 13. The bracket 15 supports the first support member 13 and the second support member 14. The bracket 15 is coupled to the steering shaft 3. The front wheel 5 is connected to a cable member 16. The cable member 16 includes a wire transmitting the rotation of the front wheel 5 to the abovementioned speedometer unit 11.

As shown in FIG. 1, the vehicle body cover 9 includes a front cover 31, a side cover 32, and an under cover 33. The front cover 31 primarily covers the vicinity of the head pipe 21 and the down frame 22. The front cover 31 includes a front surface 31a and a rear surface 31b. The front surface 31a covers the head pipe 21 and the down frame 22 from the front. A headlight 35 is disposed on the front surface 31a. The rear surface 31b covers the head pipe 21 and the down frame 22 from the rear.

The front surface 31a includes a concavity 310 depressed rearward as seen from the side of the vehicle. As shown in FIG. 1, an inner fender 34 is disposed in the concavity 310. The front wheel 5 is disposed forward of the inner fender 34.

As shown in FIG. 1, the side cover 32 is disposed below the seat 6. The side cover 32 covers the front and both sides of the rear frame 24, which is disposed below the seat 6. The under cover 33 is disposed between the front cover 31 and the side cover 32 in the front-back direction. The under cover 33 couples the front cover 31 and the side cover 32. The under cover 33 includes a foot board 33a. The foot board 33a is positioned between the front wheel 5 and the seat 6 in the front-back direction. The foot board 33a is positioned below the seat 6. The foot board 33a is a surface on which the feet of a rider seated on the seat 6 are placed while driving. The foot board 33a is positioned above the underframe 23. The foot board 33a is disposed between the down frame 22 and the rear frame 24 in the front-back direction. The foot board 33a is formed so as to be flat across the vehicle width direction. "The foot board 33a is...flat" means that the foot board 33a is flat enough that the feet of the rider can be placed anywhere on the footrest portion. In other words, anti-slippage ridges or the like can be formed in the foot board 33a.

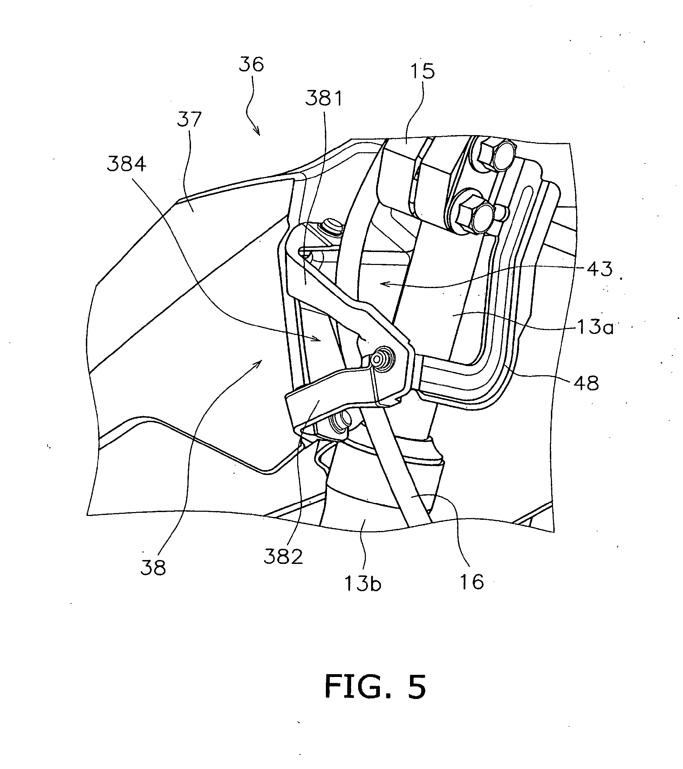

As shown in FIG. 1 through FIG. 3, the saddle-ride type vehicle 1 includes a front fender unit 36. The front fender unit 36 includes a front fender 37 and a retaining member 38. The front fender 37 is an example of the fender of the present invention. The front fender 37 is made of resin. The front fender 37 is disposed above the front wheel 5. The rear section of the front fender 37 is disposed in the concavity 310. The front fender 37 is secured to the bracket 15. FIG. 4 is an illustration of the structure of the front fender 37 and the vicinity thereof as viewed along a central axis of the first support member 13 and the second support member 14. In FIG. 4, the first support member 13, the inner fender 34, and the rear surface 31b of the front cover 31 are shown in cross-section. FIG. 5 is a perspective view of the structure of the front fender 37 and the vicinity thereof.

As shown in FIG. 4, the front fender 37 includes a fender front section 41 and a fender rear section 42. The fender rear section 42 is disposed behind the fender front section 41. The fender rear section 42 is disposed between the first support member 13 and the second support member 14. The fender front section 41 includes a first side surface front section 41a that is one of the left or right surfaces, and a second side surface front section 41b that is the other left or right surface. Specifically, the first side surface front section 41a is the left side surface of the fender front section 41. The second side surface front section 41b is the right side surface of the fender front section 41. The first side surface front section 41a is an example of the first side surface of the present invention. The second side surface front section 41b is an example of the second side surface of the present invention. The fender rear section 42 includes a first side surface rear section 42a that is one of the left and right surfaces, and a second side surface rear section 42b that is the other of the left and right surfaces. Specifically, the first side surface rear section 42a is the left side surface of the fender rear section 42. The second side surface rear section 42b is the right side surface of the fender rear section 42. The rear end of the first side surface front section 41a is positioned outward from the first side surface rear section 42a with respect to the vehicle width direction. The rear end of the first side surface front section 41a is disposed outward from the first support member 13. The first side surface rear section 42a is disposed inward from the first support member 13. The front fender 37 includes an inset portion 43. The inset portion 43 is formed between the first side surface front section 41a and the first side surface rear section 42a. The inset portion 43 is of a concave shape depressed inward with respect to the vehicle width direction. As shown in FIG. 3, the inset portion 43 inclines upward and forward as seen from the side. The inset portion 43 connects the first side surface front section 41a and the first side surface rear section 42a. The inset portion 43 connects the rear end of the first side surface front section 41a and the first side surface rear section 42a.

As shown in FIG. 4, the rear end of the second side surface front section 41b is disposed outward from the second side surface rear section 42b with respect to the vehicle width direction. The rear end of the second side surface front section 41b extends farther rearward than the front end of the second side surface rear section 42b. The rear end of the second side surface front section 41b is positioned farther rearward than the rear end of the first side surface front section 41a. A concavity 44 is thus formed between the rear end of the second side surface front section 41b and the second side surface rear section 42b. The concavity 44 includes a shape caving inward towards the front direction. The second support member 14 is disposed in a space bounded by the concavity 44. The vehicle width direction dimension of the space bounded by the concavity 44 is greater than the major diameter of an outer tube 14b of the second support member 14. Interference of the outer tube 14b with the front fender 37 is thus prevented when the second support member 14 is retracted.

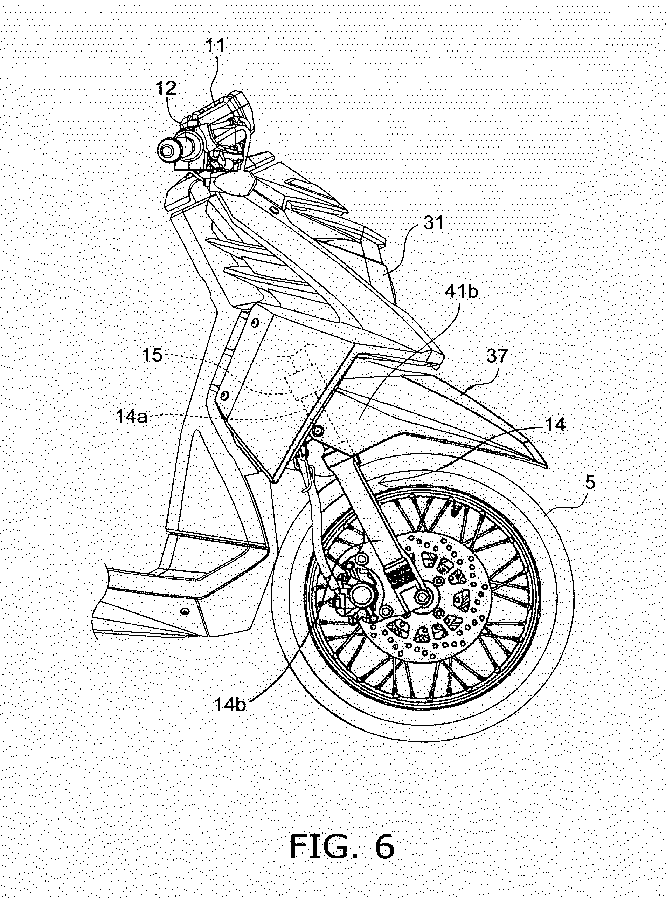

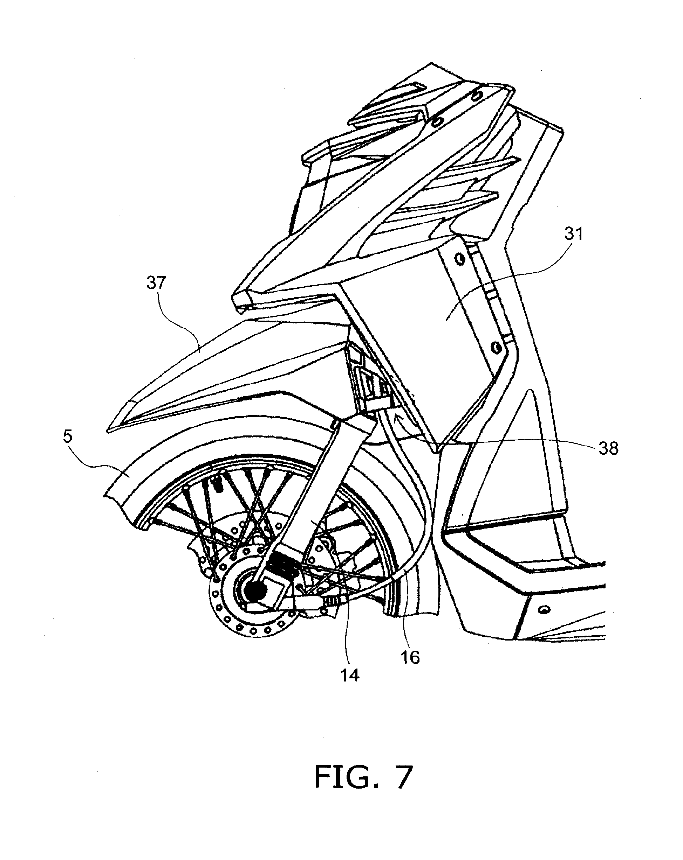

The retaining member 38 retains the cable member 16. The retaining member 38 is a separate member from the front fender 37. The retaining member 38 is made of resin. The retaining member 38 is preferably made of a material having a higher wear resistance than the front fender 37. For example, the front fender 37 can be made of ABS resin, and the retaining member 38 made of nylon. The retaining member 38 is attached to the front fender 37. Specifically, the retaining member 38 is attached to the inset portion 43. The retaining member 38 is disposed so as to project rearward from the front fender 37. Specifically, the retaining member 38 is disposed so as to project rearward from the first side surface front section 41a. The retaining member 38 is disposed to a side away from a centerline C1 of the vehicle in the vehicle width direction. The retaining member 38 is disposed outward from the first side surface rear section 42a with respect to the vehicle width direction. The retaining member 38 is disposed so as to cover the first support member 13 from the side. Specifically, the first support member 13 is covered by the retaining member 38 from the side. Meanwhile, the second support member 14 is covered by the second side surface front section 41b from the side. Specifically, as shown in FIG. 3, the retaining member 38 is disposed so as to overlap at least a portion of the inner tube 13a of the first support member 13 as viewed from the side. As shown in FIG. 6, the second side surface front section 41b is disposed so as to overlap at least a portion of an inner tube 14a of the second support member 14 as viewed from the side. FIG. 6 is a right side view of the front portion of the saddle-ride type vehicle 1. FIG. 7 is a left side view of the front portion of the saddle-ride type vehicle 1. As shown in FIG. 7, the front cover 31 overlaps at least a portion of the retaining member 38 as viewed from the side. Specifically, the front cover 31 covers at least a portion of the retaining member 38 from the side.

As shown in FIG. 3, an upper edge 38a of the retaining member 38 includes a shape inclining rearward and downward. A lower edge 38b of the retaining member 38 includes a shape inclining rearward and upward. A front edge 38c of the retaining member 38 includes a shape inclining forward and upward, and is disposed along the inset portion 43. The retaining member 38 includes a first bent portion 381, a second bent portion 382, and a third bent portion 383. The first bent portion 381 includes the upper edge 38a of the retaining member 38. The second bent portion 382 is disposed below the first bent portion 381. The second bent portion 382 includes the lower edge 38b of the retaining member 38. An opening 384 is formed between the first bent portion 381 and the second bent portion 382. The third bent portion 383 is disposed between the first bent portion 381 and the second bent portion 382 as viewed from the side. Specifically, the third bent portion 383 is disposed so as to face the opening 384 between the first bent portion 381 and the second bent portion 382. The third bent portion 383 is disposed so as to overlap at least a portion of the first support member 13 as viewed from the side. More specifically, the third bent portion 383 is disposed so as to overlap at least a portion of the inner tube 13a of the first support member 13 as viewed from the side.

As shown in FIG. 4, the first bent portion 381 includes a shape that is bent convexly outward with respect to the vehicle width direction. The second bent portion 382 includes a shape that is bent convexly outward with respect to the vehicle width direction. The third bent portion 383 includes a shape that is bent convexly inward with respect to the vehicle width direction. The cable member 16 is disposed so as to pass between the first bent portion 381 and the second bent portion 382, and between the second bent portion 382 and the third bent portion 383. The space between the first bent portion 381 and the second bent portion 382 and the space between the second bent portion 382 and the third bent portion 383 have an interval greater than the major diameter of the cable member 16. The cable member 16 is thus retained so as to be movable within a specific range by the retaining member 38. At least a portion of the retaining member 38 is disposed further inward than the rear end of the first side surface front section 41a with respect to the vehicle width direction. Specifically, the third bent portion 383 is positioned further inward than the rear end of the first side surface front section 41a with respect to the vehicle width direction. However, the distance between the retaining member 38 and the first side surface rear section 42a with respect to the vehicle width direction is greater than the major diameter of the outer tube 13b of the first support member 13. Interference of the outer tube 13b with the retaining member 38 is thus prevented when the first support member 13 is retracted.

The retaining member 38 includes at least three securing portions. Each of the securing portions is constituted by, for example, a screw and a screw hole through which the screw passes. In the present embodiment, as shown in FIG. 3, the retaining member 38 includes a first securing portion 45, a second securing portion 46, and a third securing portion 47. The first securing portion 45 is positioned rearward of the cable member 16. The first securing portion 45 is an example of the securing portion of the present invention. The retaining member 38 is secured to the bracket 15 at the first securing portion 45. Specifically, the retaining member 38 is secured to the bracket 15 at the first securing portion 45 by a mounting member 48. The mounting member 48 is disposed so as to extend downward from the bracket 15. An upper end of the mounting member 48 is secured to the bracket 15. A lower end of the mounting member 48 is secured to the first securing portion 45 of the retaining member 38. The second securing portion 46 is positioned forward of the cable member 16. The second securing portion 46 is positioned forward of the first support member 13. The retaining member 38 is secured to the front fender 37 at the second securing portion 46. Specifically, the retaining member 38 is secured to an upper portion of the inset portion 43 at the second securing portion 46. The third securing portion 47 is positioned forward of the cable member 16. The third securing portion 47 is disposed so to overlap the first support member 13 as viewed from the side. The third securing portion 47 is positioned below the second securing portion 46. The retaining member 38 is secured to the front fender 37 at the third securing portion 47. Specifically, the retaining member 38 is secured to a lower portion of the inset portion 43 at the third securing portion 47.

The saddle-ride type vehicle 1 according to the present embodiment has the following features.

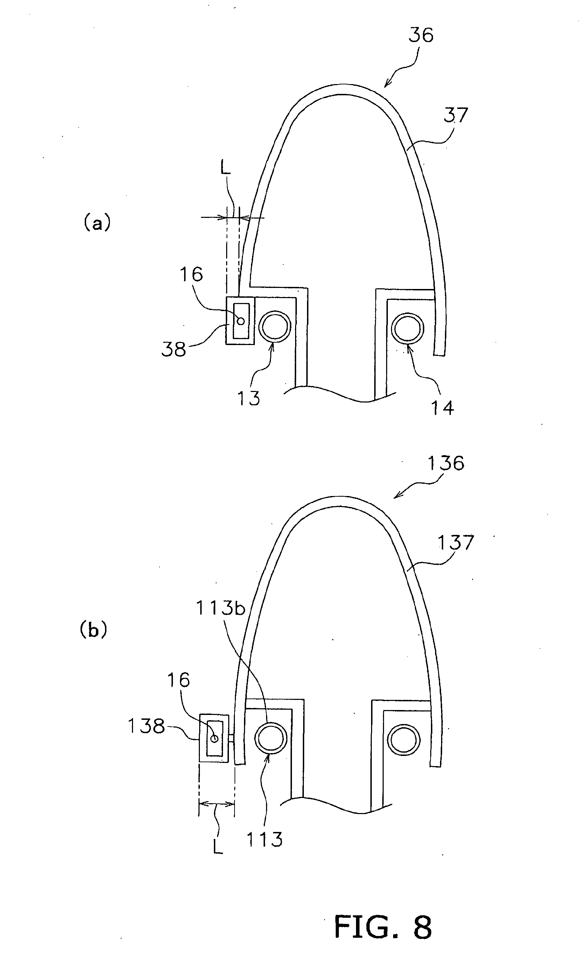

The retaining member 38 is disposed so as to project rearward from the front fender 37. It is thereby possible to reduce the distance to which the retaining member 38 projects sideways from the front fender 37 compared to when the retaining member 38 as a whole is disposed to the side of the front fender 37. FIG. 8(a) is a schematic view of the retaining member 38 according to the present embodiment. FIG. 8(b) is a schematic view of the disposition of a retaining member 138 according to a comparative example. In FIG. 8(b), the retaining member 138 is disposed so as to project sideways from a front fender 137. As shown in FIG. 8, the disposition of the retaining member 38 according to the present embodiment is such that the length L to which the retaining member 38 projects to the side is shorter compared to the disposition of the retaining member 138 in the comparative example. It is thus possible to reduce the air resistance to which the retaining member 38 is subjected during driving.

The retaining member 38 covers the first support member 13 from the side. Thus, the first support member 13 is protected by the retaining member 38, thereby preventing damage to the first support member 13. The retaining member 138 of the comparative example shown in FIG. 8(b) is disposed so that a first support member 113 is protected by a side surface of the front fender 137. However, because the retaining member 138 is disposed so as to project sideways from the side surface thereof, the dimensions of a front fender unit 136 in the vehicle width direction are increased. In particular, if the front fender 137 is attached to the bracket 15 of the front fork 4 as described above, clearance between the first support member 113 and the front fender 137 must be secured in order to prevent interference with an outer tube 113b of the first support member 113. For this reason, if the retaining member 138 is disposed so as to project from a side surface of the front fender 137, the dimensions of the front fender unit 136 in the vehicle width direction are increased even further. In other words, if the retaining member 138 is disposed as described above in order to protect the first support member 113, it becomes difficult to reduce increases in the dimensions of the front fender unit 136 in the vehicle width direction. By contrast, the saddle-ride type vehicle 1 according to the present embodiment both allows the first support member 13 to be protected by the retaining member 38, and suppresses increasing in the dimensions of the front fender unit 36 in the vehicle width direction.

Because the retaining member 38 is disposed to a side away from the centerline of the vehicle in the vehicle width direction, the retaining member 38 does not have a portion passing through the centerline of the vehicle in the vehicle width direction. In other words, as shown in FIG. 4, the retaining member 38 does not have a portion passing through the rear of the front fender 37. Thus, it is possible to avoid the interval between the inner fender 34 facing the front fender 37 and the rear portion of the front fender 37 being narrowed by the retaining member 38.

As shown in FIG. 7, the front cover 31 covers at least a portion of the retaining member 38 from the side. Thus, at least a portion of the retaining member 38 is protected by the front cover 31.

The front fender 37 is secured to the bracket 15. It is thus possible to easily ensure that the retaining member 38 is firmly installed.

The second side surface front section 41b of the front fender 37 is disposed so as to cover the second support member 14 from the side. Thus, the second support member 14 is protected by the second side surface front section 41b. The retaining member 38 is not attached to the second side surface front section 41b. In other words, the front fender 37 has a shape that is asymmetrical from left to right. Thus, increases in the dimensions of the front fender 37 in the vehicle width direction can be suppressed.

Because the retaining member 38 and the front fender 37 are made of resin, manufacturing is easier and manufacturing costs can be reduced compared to if the retaining member and the front fender were made of metal. However, if the retaining member 38 and front fender 37 are made of resin, the retaining member 38 is more easily affected by air resistance when the vehicle is being driven. However, in the saddle-ride type vehicle 1 according to the present embodiment, the air resistance to which the retaining member 38 is subjected during driving can be reduced, allowing the effects of air resistance to be alleviated. The retaining member 38 is a separate member from the front fender 37. This facilitates forming the retaining member 38. The retaining member 38 is also made of a material having a higher wear resistance than the front fender 37. Wearing of the front fender 37 by the cable member 16 is thus reduced. In addition, if portion of the front fender 37 is used as a retainer for the cable member 16, the entire front fender 37 must be formed from a material having high wear resistance. The present embodiment allows for manufacturing costs to be reduced compared to such cases.

The cable member 16 includes a wire transmitting the rotation of the front wheel 5. The wire for conveying the rotation of the front wheel 5 is thicker than an electrical wire for transmitting electrical signals, and thus cannot easily be flexibly formed. Thus, the cable member 16 is preferably retained so as to be movable within a predetermined range, rather than immovably secured. A larger retaining member 38 compared to when only an electrical wire is retained is therefore necessary. In such cases, the air resistance to which the retaining member 38 is subjected while driving increases. However, in the saddle-ride type vehicle 1 according to the present embodiment, the air resistance to which the retaining member 38 is subjected during driving can be reduced, allowing the effects of air resistance to be alleviated.

The retaining member 38 is secured to the bracket 15 at the first securing portion 45. The first securing portion 45 is positioned rearward of the cable member 16. The retaining member 38 is secured to the front fender 37 at the second securing portion 46 and the third securing portion 47. The second securing portion 46 and third securing portion 47 are positioned forward of the cable member 16. It is thereby possible to firmly attach the retaining member 38 to the bracket 15 and the front fender 37.

The upper edge 38a of the retaining member 38 includes a shape inclining rearward and downward. It is thus possible to avoid interference of the retaining member 38 with other members (for example, portion of the vehicle body frame 2).

An embodiment of the present invention has been described above, but the present invention is not limited to this embodiment, and various modifications are possible to the extent that they remain within the scope of the invention defined by the claims.

Saddle-ride type vehicles are not limited to two-wheeled vehicles, but also encompass three-wheeled vehicles and all-terrain vehicles. Two-wheeled vehicles are not limited to scooters, but also encompass mopeds and sport bikes.

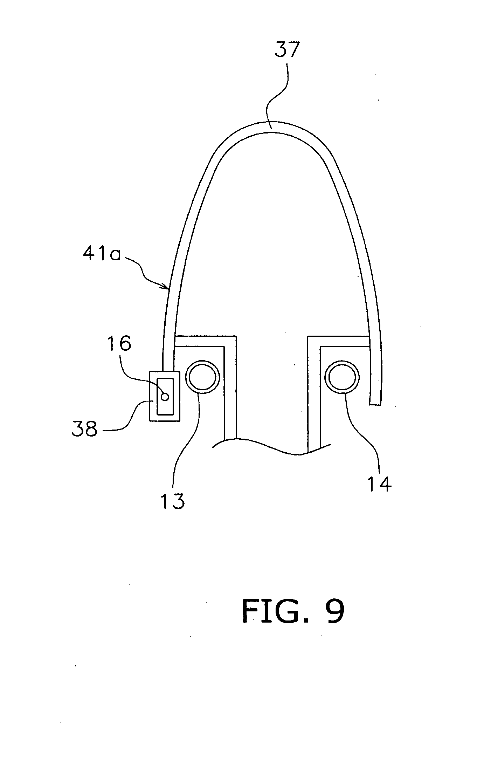

In the embodiment described above, the retaining member 38 is disposed in the inset portion 43 of the front fender 37, but an inset portion 43 need not be formed in the front fender 37. For example, as shown in FIG. 9, it is possible not to form an inset portion in the front fender 37, and dispose the retaining member 38 so as to extend rearward from the first side surface front section 41a of the front fender 37.

In the embodiment described above, at least a portion of the retaining member 38 is covered by the front cover 31, but it is also acceptable for the at least a portion of the retaining member 38 to be covered by another portion of the vehicle body cover 9.

The retaining member 38 may be secured only to the front fender 37. In such cases, the retaining member 38 preferably includes a securing portion positioned rearward of the cable member 16, and is secured to the front fender 37 at the securing portion. The number of securing portions of the retaining member 38 is not limited to three, as in the above embodiment. The retaining member 38 may include one or two securing portions, or four or more.

The retaining member 38 and front fender 37 may be formed from a material other than resin. However, the retaining member 38 and front fender 37 are preferably made from resin from considerations of ease of forming and manufacturing costs. The retaining member 38 may be formed as a single piece with the front fender 37. However, if the shape of the retaining member 38 or the front fender 37 is complex, or the retaining member 38 and front fender 37 are formed from different materials, the retaining member 38 is preferably a separate part from the front fender 37.

The retaining member 38 is disposed so as to project rearward from the front fender 37. Here, "rearward" is not limited to straight back, but may also be obliquely rearward. For example, the retaining member 38 may be disposed so as to project diagonally rearward to the left, diagonally rearward to the right, diagonally upwards and rearward, or diagonally downwards and rearward, from the front fender 37.

The cable member 16 may include an electrical wire. However, if the cable member 16 includes a wire for conveying the rotation of the front wheel 5, as described above, the length to which the retaining member 38 projects to the side tends to increase, further increasing the effectiveness of the present invention.

The upper edge 38a of the retaining member 38 is not limited to including a shape inclined rearwards and downwards. A shape different from that of the above embodiment may be adopted according to the disposition and shape of the members around the retaining member 38.

## Claims

1. A saddle-ride type vehicle (1) comprising:
a front wheel (5);
a fender (37) disposed above the front wheel (5);
a retaining member (38) attached to the fender (37);
a cable member (16) retained by the retaining member (38); and
a front fork (4) including a first support member (13), a second support member (14), and
a bracket (15), wherein the first support member (13) and the second support member (14) are aligned in the vehicle width direction and adapted to rotatably support the front wheel (5), and the bracket (15) supports the first support member (13) and the second support member (14);
wherein the fender (37) is secured to the bracket (15) and includes a first side surface (41a) that is one of a left or right surface, and a second side surface (41b) that is the other left or right surface;
**characterized in that**
the retaining member (38) projects rearward from the first side surface (41a), and is disposed so as to cover the first support member (13) from the side; and
the second side surface (41b) is disposed so as to cover the second support member (14) from the side.

2. A saddle-ride type vehicle (1) according to claim 1, wherein:
the retaining member (38) is disposed to a side away from the centerline (C1) of the vehicle in the vehicle width direction.

3. A saddle-ride type vehicle (1) according to claim 1 or 2; wherein the fender (37) includes an inset portion (43) depressed inward in the vehicle width direction; and
the retaining member (38) is attached to the inset portion (43).

4. A saddle-ride type vehicle (1) according to claim 3, wherein the inset portion (43) covers the first support member (13) from the front.

5. A saddle-ride type vehicle (1) according to any one of claims 1 to 4;
wherein the retaining member (38) includes a securing portion (45, 46, 47) positioned rearward of the cable member (16), and is secured to the fender (37) at the securing portion (45, 46, 47).

6. A saddle-ride type vehicle (1) according to any one of claims 1 to 5, further comprising:
a vehicle body cover (9);
wherein the vehicle body cover (9) covers at least a portion of the retaining member (38) from the side.

7. A saddle-ride type vehicle (1) according to any one of claims 1 to 6;
wherein the retaining member (38) and the fender (37) are made of resin.

8. A saddle-ride type vehicle (1) according to any one of claims 1 to 7;
wherein the retaining member (38) is made of a material having greater wear resistance than the fender (37).

9. A saddle-ride type vehicle (1) according to any one of claims 1 to 8;
wherein the cable member (16) includes a wire for transmitting the rotation of the front wheel (5).

10. A saddle-ride type vehicle (1) according to any one of claims 1 to 9;
wherein an upper edge (38a) of the retaining member (38) includes a shape inclining rearwards and downwards.

11. A saddle-ride type vehicle (1) according to any one of claims 1 to 10;
wherein the retaining member (38) is a separate member from the fender (37).

## Patentansprüche

1. Fahrzeug (1) vom Sattelfahrtyp, umfassend:
ein Vorderrad (5),
ein Schutzblech (37), das über dem Vorderrad (5) angeordnet ist,
ein Halteglied (38), das an dem Schutzblech (37) befestigt ist,
ein Kabelglied (16), das durch das Halteglied (38) gehalten wird, und
eine Vordergabel (4), die ein erstes Lagerglied (13), ein zweites Lagerglied (14) und eine Klammer (15) umfasst, wobei das erste Lagerglied (13) und das zweite Lagerglied (14) in der Fahrzeugbreitenrichtung ausgerichtet sind und ausgebildet sind, um das Vorderrad (5) drehbar zu halten, wobei die Klammer (15) das erste Lagerglied (13) und das zweite Lagerglied (14) hält,
wobei das Schutzblech (37) an der Klammer (15) befestigt ist und eine erste Seitenfläche (41a), die eine linke oder rechte Fläche ist, und eine zweite Seitenfläche (41b), die die andere linke oder rechte Fläche ist, aufweist,
**dadurch gekennzeichnet, dass**
das Halteglied (38) von der ersten Seitenfläche (41 a) nach hinten vorsteht und derart angeordnet ist, dass es das erste Lagerglied (13) von der Seite bedeckt, und
die zweite Seitenfläche (41b) derart angeordnet ist, dass sie das zweite Lagerglied (14) von der Seite bedeckt.

2. Fahrzeug (1) vom Sattelfahrtyp nach Anspruch 1, wobei:
das Halteglied (38) seitlich entfernt von der Mittenlinie (C1) des Fahrzeugs in der Fahrzeugbreitenrichtung angeordnet ist.

3. Fahrzeug (1) vom Sattelfahrtyp nach Anspruch 1 oder 2, wobei:
das Schutzblech (37) einen Einsteckteil (43) umfasst, der in der Fahrzeugbreitenrichtung nach innen vertieft ist, und
das Halteglied (38) an dem Einsteckteil (43) befestigt ist.

4. Fahrzeug (1) vom Sattelfahrtyp nach Anspruch 3, wobei der Einsteckteil (43) das erste Lagerglied (13) von vorne bedeckt.

5. Fahrzeug (1) vom Sattelfahrtyp nach einem der Ansprüche 1 bis 4,
wobei das Halteglied (38) einen Befestigungsteil (45, 46, 47), der hinter dem Kabelglied (16) angeordnet ist, umfasst und über den Befestigungsteil (45, 46, 47) an dem Schutzblech (37) befestigt ist.

6. Fahrzeug (1) vom Sattelfahrtyp nach einem der Ansprüche 1 bis 5, das weiterhin umfasst:
eine Fahrzeugkörperabdeckung (9),
wobei die Fahrzeugkörperabdeckung (9) wenigstens einen Teil des Halteglieds (38) von der Seite bedeckt.

7. Fahrzeug (1) vom Sattelfahrtyp nach einem der Ansprüche 1 bis 6, wobei:
das Halteglied (38) und das Schutzblech (37) aus Kunstharz ausgebildet sind.

8. Fahrzeug (1) vom Sattelfahrtyp nach einem der Ansprüche 1 bis 7, wobei:
das Halteglied (38) aus einem Material mit einer größeren Verschleißbeständigkeit als das Schutzblech (37) ausgebildet ist.

9. Fahrzeug (1) vom Sattelfahrtyp nach einem der Ansprüche 1 bis 8, wobei:
das Kabelglied (16) einen Draht zum Übertragen der Drehung des Vorderrads (5) enthält.

10. Fahrzeug (1) vom Sattelfahrtyp nach einem der Ansprüche 1 bis 9, wobei:
eine obere Kante (38a) des Halteglieds (38) eine sich nach hinten und unten neigende Form aufweist.

11. Fahrzeug (1) vom Sattelfahrtyp nach einem der Ansprüche 1 bis 10, wobei:
das Halteglied (38) ein zu dem Schutzblech (37) separates Glied ist.

## Revendications

1. Véhicule de type à selle (1) comprenant :
une roue avant (5) ;
un garde-boue (37) agencé au-dessus de la roue avant (5) ;
un élément de rétention (38) attaché au garde-boue (37) ;
un élément de câble (16) retenu par l'élément de rétention (38) ; et
une fourche avant (4) comprenant un premier élément de support (13), un deuxième élément de support (14) et une fixation (15), dans lequel le premier élément de support (13) et le deuxième élément de support (14) sont alignés en direction de la largeur du véhicule et adaptés pour supporter la roue avant (5) de manière rotative, et la fixation (15) supporte le premier élément de support (13) et le deuxième élément de support (14) ;
dans lequel le garde-boue (37) est assuré à la fixation (15) et comprend une première surface latérale (41a) qui est soit une surface gauche, soit une surface droite, et une deuxième surface latérale (41b) qui est l'autre surface parmi lesdites surfaces gauche et droite ;
**caractérisé en ce que**
l'élément de rétention (38) se projette vers l'arrière depuis la première surface latérale (41a), et est agencé de manière à recouvrir le premier élément de support (13) depuis le côté ; et
la deuxième surface latérale (41b) est agencée de manière à recouvrir le deuxième élément de support (14) depuis le côté.

2. Véhicule de type à selle (1) selon la revendication 1, dans lequel :
l'élément de rétention (38) est agencé sur un côté éloigné de la ligne médiane (C1) du véhicule en direction de la largeur du véhicule.

3. Véhicule de type à selle (1) selon la revendication 1 ou 2, dans lequel
le garde-boue (37) comprend une portion renfoncée (43) qui est renfoncée vers l'intérieur en direction de la largeur du véhicule ; et
l'élément de rétention (38) est attaché à la portion renfoncée (43).

4. Véhicule de type à selle (1) selon la revendication 3, dans lequel la portion renfoncée (43) recouvre le premier élément de support (13) depuis l'avant.

5. Véhicule de type à selle (1) selon l'une quelconque des revendications 1 à 4,
dans lequel l'élément de rétention (38) comprend une portion d'assurage (45, 46, 47) positionnée à l'arrière de l'élément de câble (16), et est assuré au garde-boue (37) à la portion d'assurage (45, 46, 47).

6. Véhicule de type à selle (1) selon l'une quelconque des revendications 1 à 5, comprenant en outre :
un carénage de corps de véhicule (9) ;
dans lequel le carénage de corps de véhicule (9) recouvre au moins une portion de l'élément de rétention (38) depuis le côté.

7. Véhicule de type à selle (1) selon l'une quelconque des revendications 1 à 6,
dans lequel l'élément de rétention (38) et le garde-boue (37) sont constitués de résine.

8. Véhicule de type à selle (1) selon l'une quelconque des revendications 1 à 7,
dans lequel l'élément de rétention (38) est constitué d'un matériau ayant une plus grande résistance à l'usure que le garde-boue (37).

9. Véhicule de type à selle (1) selon l'une quelconque des revendications 1 à 8,
dans lequel l'élément de câble (16) comprend un fil pour transmettre la rotation de la roue avant (5).

10. Véhicule de type à selle (1) selon l'une quelconque des revendications 1 à 9,
dans lequel un bord supérieur (38a) de l'élément de rétention (38) comprend une forme inclinée vers l'arrière et vers le bas.

11. Véhicule de type à selle (1) selon l'une quelconque des revendications 1 à 10,
dans lequel l'élément de rétention (38) est un élément séparé du garde-boue (37).
